# FASCICULE DE BREVET EUROPEEN

(11) **EP 1 103 019 B1**
(45) Date de publication et mention de la délivrance du brevet: **27.03.2002**
(21) Numéro de dépôt: 99936685.9
(22) Date de dépôt: 04.08.1999
(51) Int. Cl.: G05B 19/042

(54) **DISPOSITIF D'ENTREE LOGIQUE A RECUPERATION D'ENERGIE POUR UN AUTOMATISME INDUSTRIEL**
LOGISCHE EINGABEEINRICHTUNG MIT ENERGIERÜCKGEWINNUNG FÜR EINE INDUSTRIELLE AUTOMATIONSANLAGE
LOGIC INPUT DEVICE FOR ENERGY RECOVERY IN A PROCESS CONTROL

(30) Priorité: 04.08.1998 FR 9810169
(43) Date de publication de la demande: 30.05.2001
(73) Titulaire: SOPRANO, F-38090 Vaulx Milieu (FR)
(72) Inventeur: PIRON, Patrick, F-38080 L'Isle d'Abeau (FR)
(74) Mandataire: Hecké, Gérard
(86) Numéro de dépôt international: FR9901929
(87) Numéro de publication internationale: WO0008529

(56) Documents cités:
- EP-A- 0 540 373
- EP-A- 0 695 023
- PEREZ M A ET AL: "THE FORWARD DISCHARGE CONVERTER (FDC): A GENERAL SOLUTION TO OBTAIN SOFT-SWTICHING IN ANY POWER CONVERTER" PROCEEDINGS OF THE ANNUAL POWER ELECTRONICS SPECIALISTS CONFERENCE (PESC), TOLEDO, JUNE 29 - JULY 3, 1992, vol. 1, no. CONF. 23, 29 juin 1992 (1992-06-29), pages 101-108, XP000369022 INSTITUTE OF ELECTRICAL AND ELECTRONICS ENGINEERS

## Description

### Domaine technique de l'invention

L'invention est relative à un dispositif d'entrée logique d'un équipement électronique. pour un automatisme industriel comportant un premier étage de détection ayant une pluralité de circuits d'entrées, et un circuit d'acquisition des signaux d'entrées détectés par lesdits circuits d'entrées.

### Etat de la technique

La fonction entrée logique mise en oeuvre dans les équipements électroniques pour des automatismes d'installations embarquées, notamment de véhicules de transport ferroviaire, nécessite généralement un courant important dans les entrées logiques. Le problème posé dans les équipements classiques est alors celui de la dissipation thermique dans les résistances de mesure, car une entrée logique sous une tension de 110 Volts par exemple, et un courant d'intensité de 10 mA, dissipera une puissance thermique de 1,1 W. La dissipation thermique globale est bien entendu proportionnelle au nombre d'entrées logiques, et nécessite souvent l'emploi de dispositifs de refroidissement par radiateur ou caloducs pour dissiper la chaleur vers l'extérieur. L'alimentation électrique de l'équipement s'effectuant à partir d'un réseau de sécurité à batterie d'accumulateurs, il en résulte en plus une perte d'énergie électrique du véhicule.

### Objet de l'invention

L'objet de l'invention consiste à réaliser un dispositif d'entrée logique à échauffement réduit et à récupération d'énergie électrique.

Le dispositif d'entrée logique selon l'invention est caractérisé en ce que
- chaque circuit d'entrée du premier étage de détection comporte un premier transformateur ayant un enroulement primaire relié à l'entrée correspondante par l'intermédiaire d'un premier transistor de hachage, et un enroulement secondaire connecté à un circuit de redressement à diode,
- une première horloge est destinée à envoyer des signaux de commande au premier transistor de hachage,
- des moyens de réglage coopèrent avec la première horloge pour l'ajustage de la fréquence des signaux de commande ou du rapport cyclique pour l'adaptation en tension dudit circuit d'entrée,
- un détecteur de niveau logique est inséré dans le circuit secondaire ou primaire du premier transformateur, et se trouve en liaison électrique avec le circuit d'acquisition,
- et un deuxième étage de récupération est connecté à une batterie d'alimentation de l'équipement pour restituer l'énergie drainée par l'ensemble des circuits d'entrées du premier étage de détection.

La dissipation thermique est ainsi réduite pouvant éviter l'emploi de radiateurs, et il en résulte en plus une économie de l'énergie électrique suite à l'effet de restitution à la batterie.

Selon une caractéristique de l'invention, le détecteur de niveau logique est formé par une résistance d'un shunt de mesure ou par un élément optocoupleur, ayant un récepteur délivrant le signal d'entrée vers le circuit d'acquisition.

Selon un mode de réalisation, le deuxième étage de récupération d'énergie comporte un deuxième transformateur élévateur de tension, doté d'un enroulement primaire en liaison électrique avec le circuit de redressement à diode du premier transformateur, et d'un enroulement secondaire connecté à la batterie au moyen d'un circuit de redressement et de filtrage à diode et condensateur. Un condensateur de filtrage est associé au circuit de redressement à diode de chaque circuit d'entrée en étant inséré dans le circuit secondaire après le détecteur de niveau logique.

L'enroulement primaire du deuxième transformateur est relié électriquement en série avec un deuxième transistor de hachage piloté par une deuxième horloge. La deuxième horloge se trouve en opposition de phase avec la première horloge.

Selon une autre caractéristique de l'invention, un capteur de tension est associé à l'entrée du deuxième étage de récupération, et coopère avec un circuit de régulation de la deuxième horloge pour régler la fréquence des signaux de découpage appliqués au deuxième transistor.

Le deuxième transistor de hachage peut être supprimé dans le circuit primaire du deuxième transformateur si la tension redressée par les circuits d'entrées n'est pas filtrée.

Selon un autre mode de réalisation, le deuxième étage de récupération d'énergie est connecté directement au circuit de redressement à diode de chaque circuit d'entrée du premier étage de détection. Une diode à roue libre est connectée à l'entrée d'un circuit de filtrage, et est branchée d'autre part en parrallèle aux bornes de l'enroulement secondaire et de la diode de redressement.

### Description sommaire des dessins

D'autres avantages et caractéristiques ressortiront plus clairement de la description qui va suivre de plusieurs modes de réalisation de l'invention, donnés à titre d'exemples non limitatifs, et représentés aux dessins annexés, dans lesquels :
- la figure 1 est une vue schématique des deux étages du dispositif d'entrée logique selon l'invention, trois des n circuits d'entrées étant représentés à titre d'exemples;
- la figure 2 montre le schéma d'une variante de réalisation d'un circuit d'entrée précédant le deuxième étage de récupération;
- la figure 3 est une autre variante de la figure 2 ;
- la figure 4 est une autre variante de la figure 2 sans transformateur dans le circuit de récupération.

### Description de l'invention

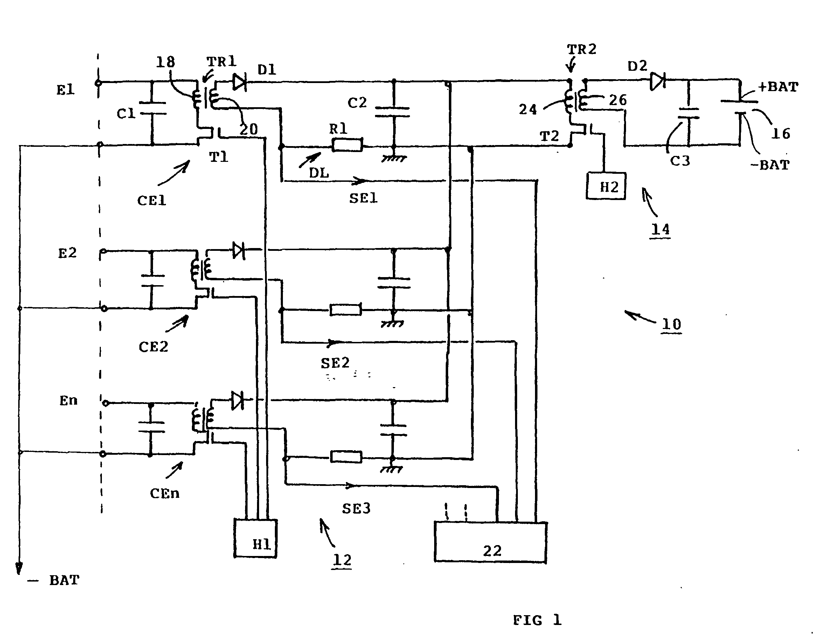

Sur la figure 1, un dispositif d'entrée logique 10 d'un équipement électronique pour un système d'automatisme industriel, comporte un premier étage de détection 12 ayant une pluralité de circuits d'entrées CE1, CE2,...CEn, et un deuxième étage de récupération 14 de l'énergie, lequel est raccordé à une batterie 16 ou une autre source à courant continu, ayant un pôle positif +BAT, et un pôle négatif -BAT.

Les circuits d'entrées élémentaires CE1, CE2, ... CEn du premier étage de détection 12 sont tous identiques entre eux, et sont reliés respectivement aux entrées E1, E2, ...En de l'équipement électronique. Les circuits d'entrées CE1, CE2, CEn sont raccordés d'autre part en parallèle à l'entrée du deuxième étage commun de récupération 14. Par la suite, seul le circuit d'entrée CE1 du premier étage de détection 12 sera décrit en détail.

Le circuit d'entrée CE1 comporte un premier transformateur TR1, ayant l'enroulement primaire 18 relié à l'entrée E1 par l'intermédiaire d'un premier transistor de hachage T1. Un condensateur C1 de filtrage est connecté en parallèle aux bornes de l'enroulement primaire 18 en série avec le premier transistor de hachage T1, de manière à assurer le lissage du courant pour conserver une entrée logique du type DC à courant continu. Le premier transistor de hachage T1 est piloté par une première horloge H1 destinée à envoyer des signaux de commande dont la fréquence est ajustable entre 3-500 kHz.

L'enroulement secondaire 20 du premier transformateur TR1 est connecté à une diode D1 de redressement et à une résistance de mesure R1 constituant un détecteur de niveau logique DL, destiné à délivrer le signal d'entrée logique SE1 à un circuit d'acquisition 22 de l'équipement. Les signaux d'entrée SE2, SEn des autres circuits d'entrée CE2, CEn sont également appliqués au même circuit d'acquisition 22.

A la sortie du circuit secondaire du premier transformateur TR1, un condensateur C2 de filtrage est connecté en parallèle entre la cathode de la diode D1, et la résistance R1 du shunt de mesure.

Le circuit d'entrée CE1 du premier étage de détection 12 travaille en courant constant, car il est dépourvu de circuit de régulation du signal de découpage. La source du premier transistor T1 du type MOS est reliée à cet effet à un potentiel non flottant, constitué par exemple par la masse ou le pôle négatif de la batterie 16. L'entrée E1 est d'autre part adaptive en tension, soit par l'ajustage de la fréquence des signaux de la première horloge H1, soit par le réglage de son rapport cyclique.

Le deuxième étage de récupération 14 commun à l'ensemble des circuits d'entrées CE1, CE2, CEn, comprend un deuxième transformateur TR2 élévateur de tension, dont l'enroulement primaire 24 est branché aux bornes du condensateur C2 de filtrage de chaque circuit d'entrées CE1, CE2, ... CEn, par l'intermédiaire d'un deuxième transistor de hachage T2. L'enroulement secondaire 26 du transformateur TR2 est connecté à la batterie 16 par l'intermédiaire d'un circuit de redressement et de filtrage, formé par une diode D2 et un condensateur C3 de filtrage.

Le deuxième transistor de hachage T2 du type MOS est commandé par une deuxième horloge H2 délivrant des signaux de découpage en opposition de phase avec ceux de la première horloge H1, de manière à provoquer la conduction du deuxième transistor T2 pendant la phase de blocage du premier transistor T1, et réciproquement. Le deuxième étage 14 restitue ainsi vers la batterie 16 l'énergie drainée par l'ensemble des circuits d'entrée CE1, CE2,... CEn du premier étage de détection 12.

La mise en série du deuxième étage de récupération 14 avec le premier étage de détection 12 pour assurer la fonction d'entrée logique réduit la dissipation thermique au niveau de l'équipement électronique, et permet une économie de l'énergie suite à sa récupération par le deuxième étage qui la restitue à la batterie 16. Un autre avantage d'un tel agencement est l'adaptation en tension des signaux d'entrées par ajustage du rapport cyclique ou de la fréquence de la première horloge H1. La détection de niveau logique est ainsi effectuée au niveau de chaque circuit d'entrée CE1, CE2, ... CEn, sans échauffement et sans dégrader l'énergie consommée dans le dispositif d'entrée logique 10.

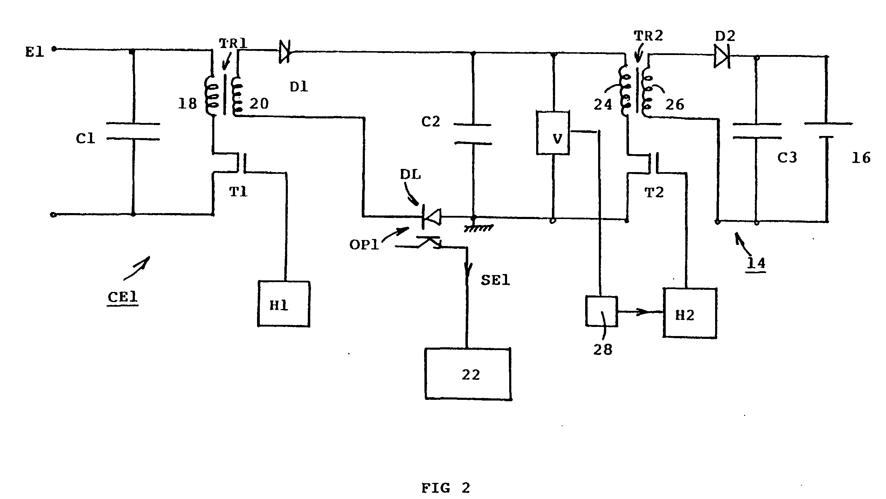

En référence à la figure 2, la résistance R1 du shunt de mesure constituant le détecteur de niveau logique dans chaque circuit d'entrées CE1, CE2, ... CEn, est remplacée par un élément optocoupleur OP1 dont le récepteur renvoie le signal d'entrée SE1 vers le circuit d'acquisition 22. Un capteur de tension V peut être avantageusement branché aux bornes du condensateur C2 pour mesurer la tension appliquée à l'enroulement primaire 24 du deuxième transformateur TR2. Un circuit de régulation 28 de la deuxième horloge H2 est piloté par le capteur de tension V pour régler la fréquence des signaux de découpage appliqués au deuxième transistor de hachage T2 en fonction de la valeur de la tension prélevée aux bornes du condensateur C2 du circuit d'entrée CE1.

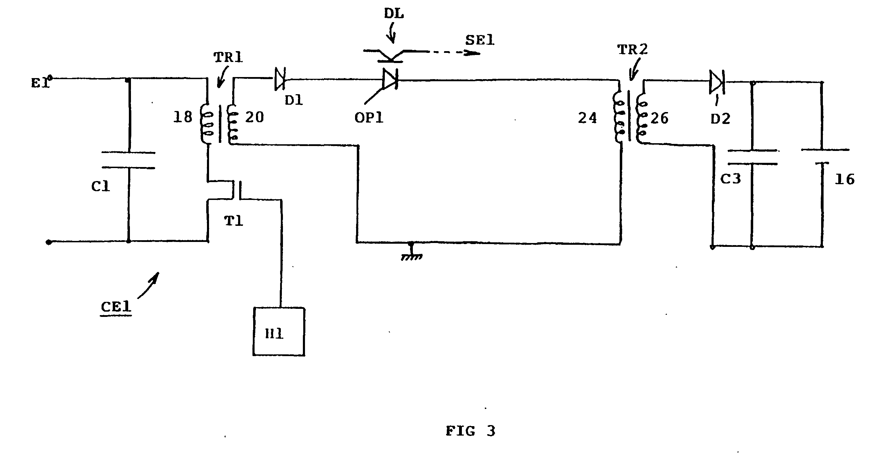

Sur la figure 3, le deuxième transistor de hachage T2 dans le circuit primaire du deuxième transformateur TR2 peut être supprimé, après enlèvement du condensateur C2 de filtrage dans le circuit d'entrée CE1. La tension redressée par la diode D1 est alors appliquée directement à l'enroulement primaire 24, puis est redressée par la diode D2, et filtrée par le condensateur C3 avant de recharger la batterie 16. Le signal d'entrée SE1 est envoyé vers le circuit d'acquisition 22 au moyen de l'optocoupleur OP1 constituant le détecteur de niveau logique, lequel est agencé entre la diode D1 et l'enroulement primaire 24.

Il est clair que les diodes de redressement D1 et D2 peuvent être remplacées par des ponts de diodes, et que les transistors MOS de hachage T1, T2 peuvent être remplacées par des éléments semiconducteurs équivalents, notamment des transistors FET.

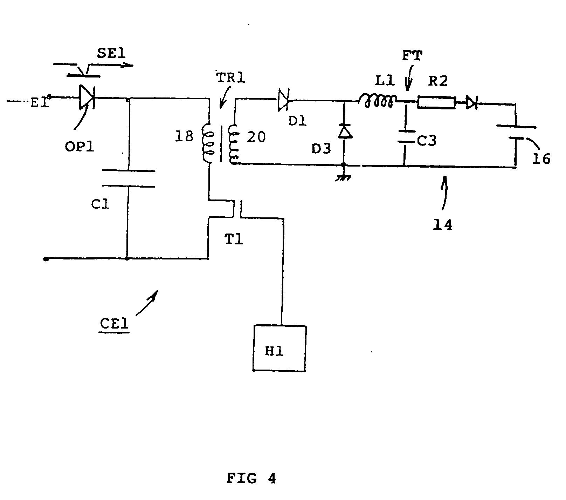

Sur la figure 4, l'étage de récupération d'énergie 14 est dépourvu de deuxième transformateur TR2. La diode de redressement D1 en série avec l'enroulement secondaire 20 du premier transformateur TR1, est reliée à la batterie 16 par l'intermédiaire d'une diode à roue libre D3, et d'un circuit de filtrage FT formé par une self L1, une résistance R2, et un condensateur C3. L'élément optocoupleur OP1 du détecteur DL de niveau logique est inséré dans le circuit primaire du premier transformateur TR1, l'anode de l'élément optocoupleur OP1 étant connectée à l'entrée E1. Il est clair que l'élément optocoupleur OP1 pourrait également être inséré dans le circuit secondaire du transformateur TR1.

## Revendications

1. Dispositif d'entrée logique d'un équipement électronique pour un automatisme industriel comportant un premier étage de détection (12) ayant une pluralité de circuits d'entrées (CE1, CE2, ...CEn), et un circuit d'acquisition (22) des signaux d'entrées (SE1, SE2, ... SEn) détectés par lesdits circuits d'entrées,
**caractérisé en ce que** :
- chaque circuit d'entrée (CE1, CE2,... CEn) du premier étage de détection (12) comporte un premier transformateur (TR1) ayant un enroulement primaire (18) relié à l'entrée (E1, E2,... En) correspondante par l'intermédiaire d'un premier transistor de hachage (T1), et un enroulement secondaire (20) connecté à un circuit de redressement à diode (D1),
- une première horloge (H1) est destinée à envoyer des signaux de commande au premier transistor de hachage (T1),
- des moyens de réglage coopèrent avec la première horloge (H1) pour l'ajustage de la fréquence des signaux de commande ou du rapport cyclique pour l'adaptation en tension dudit circuit d'entrée,
- un détecteur (DL) de niveau logique est inséré dans le circuit secondaire ou primaire du premier transformateur (TR1), et se trouve en liaison électrique avec le circuit d'acquisition (22),
- et un deuxième étage de récupération (14) est connecté à une batterie (16) d'alimentation de l'équipement pour restituer l'énergie drainée par l'ensemble des circuits d'entrées (CE1, CE2, ... CEn) du premier étage de détection (12).

2. Dispositif d'entrée logique selon la revendication 1, **caractérisé en ce que** le détecteur (DL) de niveau logique est formé par une résistance (R1) d'un shunt de mesure.

3. Dispositif d'entrée logique selon la revendication 1, **caractérisé en ce que** le détecteur (DL) de niveau logique comporte un élément optocoupleur (OP1), ayant un récepteur délivrant le signal d'entrée (SE1, SE2,... SEn) vers le circuit d'acquisition (22).

4. Dispositif d'entrée logique selon la revendication 1, **caractérisé en ce que** le deuxième étage de récupération (14) d'énergie comporte un deuxième transformateur (TR2) élévateur de tension, doté d'un enroulement primaire (24) en liaison électrique avec le circuit de redressement à diode (D1) du premier transformateur (TR1), et d'un enroulement secondaire (26) connecté à la batterie (16) au moyen d'un circuit de redressement et de filtrage à diode (D2) et condensateur (C3).

5. Dispositif d'entrée logique selon la revendication 4, **caractérisé en ce qu'**un condensateur de filtrage (C2) est associé au circuit de redressement à diode (D1) de chaque circuit d'entrée (CE1, CE2,...Cn) en étant inséré dans le circuit secondaire après le détecteur (DL) de niveau logique.

6. Dispositif d'entrée logique selon la revendication 5, **caractérisé en ce que** l'enroulement primaire (24) du deuxième transformateur (TR2) est relié électriquement en série avec un deuxième transistor de hachage (T2) piloté par une deuxième horloge (H2).

7. Dispositif d'entrée logique selon la revendication 6, **caractérisé en ce que** la deuxième horloge (H2) se trouve en opposition de phase avec la première horloge (H1), provoquant la conduction du deuxième transistor (T2) pendant la phase de blocage du premier transistor (T1), et réciproquement.

8. Dispositif d'entrée logique selon la revendication 6 ou 7, **caractérisé en ce qu'**un capteur de tension (V) est associé à l'entrée du deuxième étage de récupération (14), et coopère avec un circuit de régulation (28) de la deuxième horloge (H2) pour régler la fréquence des signaux de découpage appliqués au deuxième transistor (T2).

9. Dispositif d'entrée logique selon l'une des revendications 1 à 8, **caractérisé en ce que** la borne du premier transistor (T1) à l'opposé de l'enroulement primaire (18) se trouve à un potentiel non flottant.

10. Dispositif d'entrée logique selon l'une des revendications 1 à 3, **caractérisé en ce que** le deuxième étage de récupération (14) d'énergie est connecté directement au circuit de redressement à diode (D1) de chaque circuit d'entrée (CE1, CE2...CEn) du premier étage de détection (12).

11. Dispositif d'entrée logique selon la revendication 10, **caractérisé en ce que** le deuxième étage de récupération (14) d'énergie comporte une diode à roue libre (D3) connectée à l'entrée d'un circuit de filtrage (FT), et branchée en parrallèle aux bornes de l'enroulement secondaire (20) et de la diode de redressement (D1).

12. Dispositif d'entrée logique selon la revendication 11, **caractérisé en ce que** le circuit de filtrage (FT) comprend une self (L1) connectée à la batterie (16) par l'intermédiaire d'une résistance (R2), et un condensateur (C3) branché entre la masse et un point milieu de raccordement de la self (L1 ) et de la résistance (R2).

## Claims

1. A logic input device of an electronic equipment for an industrial automatic control system comprising a first detection stage (12) having a plurality of input circuits (CE1, CE2, ...CEn), and an acquisition circuit (22) for acquisition of the input signals (SE1, SE2, ...SEn) detected by said input circuits.
**characterized in that**:
- each input circuit (CE1, CE2, ...CEn) of the first detection stage (12) comprises a first transformer (TR1) having a primary winding (18) connected to the corresponding input (E1, E2, ...En) by means of a first chopping transistor (T1), and a secondary coil (20) connected to the diode rectifier circuit (D1),
- a first clock (H1) is designed to send control signals to the first chopping transistor (T1),
- adjustment means co-operate with the first clock (H1) for adjusting the frequency of the control signals or of the duty cycle for voltage adapting of said input circuit,
- a logic level detector (DL) is inserted in the secondary or primary circuit of the first transformer (TR1) and is electrically connected to the acquisition circuit (22),
- and a second recovery stage (14) is connected to a battery (16) supplying power to the equipment to restore the energy drained by the set of input circuits (CE1, CE2, ...CEn) of the first detection stage (12).

2. The logic input device according to claim 1, **characterized in that** the logic level detector (DL) is formed by a resistor (R1) of a measuring shunt.

3. The logic input device according to claim 1, **characterized in that** the logic level detector (DL) comprises an opto-coupling element (OP1) having a receiver delivering the input signal (SE1, SE2, ...SEn) to the acquisition circuit (22).

4. The logic input device according to claim 1, **characterized in that** the second energy recovery stage (14) comprises a second voltage step-up transformer (TR2) equipped with a primary winding (24) electrically connected to the diode rectifier circuit (D1) of the first transformer (TR1), and with a secondary winding (26) connected to the battery (16) by means of a rectifying and filtering circuit with a diode (D2) and capacitor (C3).

5. The logic input device according to claim 4, **characterized in that** a filtering capacitor (C2) is associated to the diode rectifier circuit (D1) of each input circuit (CE1, CE2, ...CEn), the filtering capacitor being inserted in the secondary circuit after the logic level detector (DL).

6. The logic input device according to claim 5, **characterized in that** the primary winding (24) of the second transformer (TR2) is electrically connected in series with a second chopping transistor (T2) controlled by a second clock (H2).

7. The logic input device according to claim 6, **characterized in that** the second clock (H2) is in phase opposition with the first clock (H1), causing turn-on of the second transistor (T2) during the turn-off phase of the first transistor (T1), and vice-versa.

8. The logic input device according to claim 6 or 7, **characterized in that** a voltage sensor (V) is associated to the input of the second recovery stage (14) and co-operates with a regulating circuit (28) of the second clock (H2) to adjust the frequency of the chopping signals applied to the second transistor (T2).

9. The logic input device according to one of the claims 1 to 8, **characterized in that** the terminal of the first transistor (T1) opposite the primary winding (18) is at a non-floating potential.

10. The logic input device according to one of the claims 1 to 3, **characterized in that** the second energy recovery stage (14) is connected directly to the diode rectifier circuit (D1) of each input circuit (CE1, CE2, ...CEn) of the first detection stage (12).

11. The logic input device according to claim 10, **characterized in that** the second energy recovery stage (14) comprises a free-wheel diode (D3) connected to the input of a filtering circuit (FT) and connected in parallel to the terminals of the secondary winding (20) and of the rectifier diode (D1).

12. The logic input device according to claim 11, **characterized in that** the filtering circuit (FT) comprises an inductance coil (L1) connected to the battery (16) by means of a resistor (R2), and a capacitor (C3) connected between the ground and a mid-point of the connection between the inductance coil (L1) and the resistor (R2).

## Patentansprüche

1. Logikeingang-Vorrichtung einer elektronischen Ausrüstung für einen Industrie-Automaten, die eine erste Feststellungsstufe (12) mit einer Mehrzahl von Eingangsschaltungen (CE1, CE2, ... CEn) sowie eine Erfassungsschaltung (22) für die Eingangssignale (SE1, SE2, ... SEn) umfasst, die von den Eingangsschaltungen festgestellt werden,
**dadurch gekennzeichnet, dass**:
- jede Eingangsschaltung (CE1, CE2, ... CEn) der ersten Feststellungsstufe (12) einen ersten Transformator (TR1) umfasst, der eine Primärwicklung (18) aufweist, die mit dem entsprechenden Eingang (E1, E2, ... En) über einen ersten Hashing-Transistor (T1) verbunden ist, sowie eine Sekundärwicklung (20), die mit einer Dioden-Gleichrichterschaltung (D1) verbunden ist,
- ein erster Zeitgeber (H1) dazu bestimmt ist, Steuersignale an den ersten Hashing-Transistor (T1) zu senden,
- Regelvorrichtungen mit dem ersten Zeitgeber (H1) zur Anpassung der Frequenz der Steuersignale oder des zyklischen Verhältnisses zur Anpassung der Spannung der genannten Eingangsschaltung zusammenwirken,
- ein Feststellungsgerät (DL) für die logische Stufe in die Sekundär- oder Primärschaltung des ersten Transformators (TR1) eingebaut wird und elektrisch verbunden ist mit der Erfassungsschaltung (22),
- und eine zweite Rückgewinnungsstufe (14) mit einer Batterie (16) zur Versorgung der Ausrüstung zur Rückgewinnung der Energie, die von allen Eingangsschaltungen (CE1, CE2, ... CEn) der ersten Feststellungsstufe (12) verbraucht wird, verbunden ist.

2. Logikeingang-Vorrichtung nach Anspruch 1, **dadurch gekennzeichnet, dass** das Feststellungsgerät (DL) für die logische Stufe von einem Widerstand (R1) eines Mess-Nebenschlusses gebildet wird.

3. Logikeingang-Vorrichtung nach Anspruch 1, **dadurch gekennzeichnet, dass** das Erkennungsgerät (DL) für die logische Stufe eine optische Koppeleinheit (OP1) umfasst, der einen Empfänger hat, der das Eingangssignal (SE1, SE2,... SEn) an die Erfassungsschaltung (22) schickt.

4. Logikeingang-Vorrichtung nach Anspruch 1, **dadurch gekennzeichnet, dass** die zweite Energierückgewinnungsstufe (14) einen zweiten Spannungserhöhungs-Transformator (TR2) umfasst, der mit einer Primärwicklung (24), die mit der Dioden-Gleichrichterschaltung (D1) des ersten Transformators (TR1) verbunden ist, sowie einer Sekundärwicklung (26) versehen ist, die mittels einer Gleichrichter- und Filtrierschaltung mit Diode (D2) und Kondensator (C3) mit der Batterie (16) verbunden ist.

5. Logikeingang-Vorrichtung nach Anspruch 4, **dadurch gekennzeichnet, dass** ein Filterungskondensator (C2) mit der Dioden-Gleichrichterschaltung (D1) jeder Eingangsschaltung (CE1, CE2, ... CEn) verbunden ist, wobei er in die Sekundärschaltung nach dem Erkennungsgerät (DL) für die logische Stufe eingebaut ist.

6. Logikeingang-Vorrichtung nach Anspruch 5, **dadurch gekennzeichnet, dass** die Primärwicklung (24) des zweiten Transformators (TR2) elektrisch mit einem zweiten Hashing-Transistor (T2) in Serie geschaltet ist, der von einem zweiten Zeitgeber (H2) gesteuert wird.

7. Logikeingang-Vorrichtung nach Anspruch 6, **dadurch gekennzeichnet, dass** sich der zweite Zeitgeber (H2) in entgegengesetzter Phase zum ersten Zeitgeber (H1) befindet, wodurch der zweite Transistor (T2) während der Blockierungsphase des ersten Transistors (T1) leitend wird und umgekehrt.

8. Logikeingang-Vorrichtung nach Anspruch 6 oder 7, **dadurch gekennzeichnet, dass** ein Spannungsaufnehmer (V) mit dem Eingang der zweiten Rückgewinnungsstufe (14) verbunden ist und mit einem Regelkreis (28) des zweiten Zeitgebers (H2) zusammenwirkt, um die Frequenz der Schaltsignale zu regeln, die an den zweiten Transistor (T2) angelegt werden.

9. Logikeingang-Vorrichtung nach einem der Ansprüche 1 bis 8, **dadurch gekennzeichnet, dass** die Klemme des ersten Transistors (T1) entgegengesetzt zur Primärwicklung (18) ein nicht schwebendes Potential hat.

10. Logikeingang-Vorrichtung nach einem der Ansprüche 1 bis 3, **dadurch gekennzeichnet, dass** die zweite Energierückgewinnungsstufe (14) direkt mit der Dioden-Gleichrichterschaltung (D1) jeder Eingangsschaltung (CE1, CE2, ... CEn) der ersten Feststellungsstufe (12) verbunden ist.

11. Logikeingang-Vorrichtung nach Anspruch 10, **dadurch gekennzeichnet, dass** die die zweite Energierückgewinnungsstufe (14) eine Freilaufdiode (D3) umfasst, die mit dem Eingang einer Filterschaltung (FT) verbunden ist und parallel zu den Klemmen der Sekundärwicklung (20) und der Gleichrichterdiode (D1) geschaltet ist.

12. Logikeingang-Vorrichtung nach Anspruch 11, **dadurch gekennzeichnet, dass** die Filterschaltung (FT) eine Drosselspule (L1) umfasst, die mit der Batterie (16) über einen Widerstand (R2) verbunden ist, sowie einen Kondensator (C3), der zwischen die Masse und einen Mittelanschlusspunkt der Drosselspule (L1) und des Widerstands (R2) geschaltet ist.
